# EUROPEAN PATENT APPLICATION

(11) **EP 4 675 327 A1**
(43) Date of publication of application: **07.01.2026**
(21) Application number: 25186318.9
(22) Date of filing: 30.06.2025
(51) Int. Cl.: G02B 6/44

(54) **OPTICAL FIBER ENCLOSURE WITH SCISSOR WALL**

(30) Priority: 04.07.2024 IN 202411051295
(71) Applicant: Sterlite Technologies Limited, Gurugram, Haryana 122102 (IN)
(72) Inventor: Borrelli, Ottavio, 122102 Gurugram, Haryana (IN); Zuccarello, Sebastiano, 122102 Gurugram, Haryana (IN)
(74) Representative: Petraz, Gilberto Luigi

(57) **Abstract**

The present disclosure provides an optical fiber enclosure (102) with at least two compartments (206, 208), and each compartment comprises at least one cable port (120, 122, 124, 126). In particular, each compartment is configured to be accessed without disturbing relative alignment of optical fiber cables (602, 604) in other compartments of the optical fiber enclosure (102). Moreover, the optical fiber enclosure (102) includes at least one scissor wall (118) at an externally accessible surface of the optical fiber enclosure (102). Further, the at least one scissor wall (118) includes at least two segments (302, 304) configured to form at least one first set of cable ports (120, 122) at mating edges (318-332) in a closed configuration.

## Description

### TECHNICAL FIELD

Embodiments of the present disclosure relate to the field of wireless communication networks of optical fibres, and in particular, relates to an optical fiber enclosure with one or more scissor wall(s) and a method for manufacturing the optical fiber cable enclosure with one or more scissor wall(s) thereof.

The present application claims the benefit of Indian Application No. 202411051295 titled "OPTICAL FIBER ENCLOSURE WITH SCISSOR WALL" filed by the applicant on July 4, 2024**,** which is incorporated herein by reference in its entirety.

### Background Art

An optical fiber (e.g., glass, plastic) carries light along its length. Light is kept in the core of the optical fiber by internal reflection. The optical fiber acts as a waveguide. Optical fiber can be used as a communication medium for telecommunication and networking applications because it is flexible and can be bundled into cables. Although referred to as "optical fiber," optical fiber is not restricted to communicating light in the visible spectrum, and may transmit light signals of higher, or lower, wavelengths.

Optical fiber is especially advantageous for communications because light propagates through the fiber with less attenuation than for electrical signals using metal wires. This facilitates long distance communications using few repeaters. And unlike electrical communication modes, light signals are immune to electromagnetic interference, thereby eliminating cross-talk between signals and the effects of environmental noise. Non-armored optical fiber cables do not conduct electricity, which makes optical fiber a good solution for protecting communications equipment located in electrically-exposed environments, including communication structures prone to lightning strikes.

Optical fiber permits transmission at higher bandwidths (e.g., data rates) than other forms of communications. Per-channel light signals propagating in the fiber can be modulated at rates in the range of gigabits per second. An individual optical fiber can carry many independent channels, each using a different wavelength of light and wavelength-division multiplexing (WDM). Optical fiber saves space in cable ducts because a single optical fiber can carry much more data than a single electrical cable.

An optical fiber enclosure (or optical fiber box) is divided into two compartments such as an upper compartment and a lower compartment. That is, a pivoting layer separates an overall optical fiber enclosure space into the upper compartment and the lower compartment, wherein an optical fiber cable entry and an optical fiber cable exit occur in their respective compartments. When a user (e.g., technician or the like) needs to access the lower compartment, the user must open an enclosure cover, potentially disrupting the alignment of optical fiber cables in the upper compartment and vice-versa.

Further, the user needs an Ingress Protection 68 (IP68) grade optical fiber enclosure capable of accommodating multiple cable entries arranged at different compartments (i.e., the upper compartment and the lower compartment). However, the user encounters difficulty managing multiple rows of the optical fiber cables with varying diameters positioned at different compartments while ensuring the sealing of the optical fiber enclosure.

A prior art reference "US2022269025A1" discloses an optical fiber box with an upper compartment and a lower compartment having different layers of fiber passages for each of the compartments. Fibers cables entering for the upper compartment are passing through a plurality of anchoring cut outs.

Another prior art reference "US2022390675A1" discloses a fiber box with multiple layers of fiber cables entering/exiting opening. The fiber cables entering/exiting opening includes fiber adapters for passing the fiber cable inside the fiber box.

Yet another prior art reference "US7471867B2" discloses a fiber box with a plurality of openings for fiber cable enter/exit at two levels.

While the prior arts cover various solutions to seal or align the optical fiber cables in the optical fiber enclosure, there still remains a scope for improvement.

Accordingly, to overcome the disadvantages of the prior arts, there is a need for a technical solution that overcomes the above-stated limitations in the prior arts. The present disclosure provides an optical fiber enclosure with one or more scissor walls and a method of manufacturing the same.

### SUMMARY OF THE DISCLOSURE

Embodiments of the present disclosure relates to an optical fiber enclosure comprising at least two compartments. In particular, each compartment has at least one cable port. Moreover, each compartment is configured to be accessed without disturbing relative alignment of optical fiber cables in other compartments of the optical fiber enclosure.

According to the first aspect of the present disclosure, optical fiber enclosure includes at least one scissor wall at an externally accessible surface of the optical fiber enclosure. Particularly, the scissor wall includes at least two segments configured to form at least one first set of cable ports at mating edges in a closed configuration. Further, at least one first set of cable ports at the mating edges are formed due to predefined undulations at the mating edges at the at least two segments in the closed configuration, and the optical fiber cables are aligned into the at least one first set of cable ports at the mating edges of the at least two segments.

In accordance with an embodiment of the present disclosure, at least two segments are dimensionally non-identical. The at least two segments are configured to rotate relative to each other to enable transition between the closed configuration and an open configuration. The at least two segments are hinged to enable relative rotation between the at least two segments.

According to the second aspect of the present disclosure,a method for operating at least one compartment from at least two compartments in an optical fiber enclosure by accessing each compartment without disturbing relative alignment of optical fiber cables in other compartments of the optical fiber enclosure, unmounting the cover and decompressing a sealing element until the optical fiber enclosure is unsealed, thereby the cover is transitioned from a completely engaged state to a completely disengaged state,mounting the cover and compressing the sealing element until the optical fiber enclosure is sealed, thereby transitioning the cover from the completely disengaged state to the completely engaged state and locking the at least two segments of at least one scissor wall.

According to the third aspect of the present disclosure,the at least one first set of cable ports at the mating edge is formed due to predefined undulations at the mating edges at the at least two segments in the closed configuration.

According to the fourth aspect of the present disclosure, at least two segments are dimensionally non-identical.

According to the fifth aspect of the present disclosure, the optical fiber enclosure has at least one scissor wall. Further, the at least one scissor wall comprises at least two segments that are configured to rotate relative to each other to enable transition between a closed configuration and an open configuration.

According to the sixth aspect of the present disclosure, at least two segments are hinged to enable relative rotation between the at least two segments.

According to the seventh aspect of the present disclosure, the optical fiber enclosure comprises a cover that is configured to transition between a completely disengaged state and a completely engaged stat
The foregoing objectives of the present disclosure are attained by employing an optical fiber enclosure with scissor walls.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a perspective view of an optical fiber enclosure in accordance with an embodiment of the disclosure;
Fig. 2 is a pictorial snapshot illustrating an exploded view of the optical fiber enclosure in accordance with an embodiment of the disclosure;
Fig. 3 is a pictorial snapshot illustrating a front perspective view of a scissor wall in a closed configuration in accordance with an embodiment of the disclosure;
Fig. 4 is a pictorial snapshot illustrating a front perspective view of the scissor wall in an open configuration in accordance with an embodiment of the disclosure;
Fig. 5 is a pictorial snapshot illustrating a side perspective view of the scissor wall in the open configuration in accordance with an embodiment of the disclosure;
Fig. 6 is a pictorial snapshot illustrating a top perspective view of the optical fiber enclosure without a cover in which the scissor wall is in the open configuration in accordance with an embodiment of the disclosure;
Fig. 7 is a pictorial snapshot illustrating a top perspective view of the optical fiber enclosure without the cover in which the scissor wall is in the closed configuration in accordance with an embodiment of the disclosure;
Fig. 8 is a pictorial snapshot illustrating a top perspective view of the optical fiber enclosure in which a pivoting layer is opened in accordance with an embodiment of the disclosure;
Fig. 9 is a pictorial snapshot illustrating a perspective view of the optical fiber enclosure having optical fiber cables in accordance with an embodiment of the disclosure;
Fig. 10, Fig. 11 and Fig. 12 illustrate a partial sectional view of the optical fiber enclosure representing placement of the scissor wall in the optical fiber enclosure in accordance with one or more embodiments of the disclosure;
Fig. 13 and Fig. 14 are flow charts illustrating a method for operating at least one compartment from at least two compartments in the optical fiber enclosure in accordance with one or more embodiments of the disclosure.

### REFERENCE NUMBERS

100 - Perspective view of an optical fiber enclosure.
102 - Optical fiber enclosure.
104 - Enclosure cover.
106 - Base.
108 - First latch.
110 - Second latch.
112 - Third latch.
114 - Fourth latch.
116 - Fifth latch.
118 - Scissor wall.
120 - First set of cable ports.
122 - First set of cable ports.
124 - Second set of cable ports.
126 - Second set of cable ports.
128 - Sixth latch
200 - Exploded view of the optical fiber enclosure.
202 - Internal fruit.
204 - Pivoting layer.
206 - Upper compartment.
208 - Lower compartment.
300 - Front perspective view of a scissor wall in a closed configuration.
302 - First segment.
304 - Second segment.
306 - First interlocking unit.
308 - Second interlocking unit.
310 - First connecting means.
312 - Second connecting means.
314 - Sealing element or elastomer.
318 - Mating edge.
320 - Mating edge.
322 - Mating edge.
324 - Mating edge.
326 - Mating edge.
328 - Mating edge.
330 - Mating edge.
332 - Mating edge.
400 - Front perspective view of a scissor wall in an open configuration.
402 - Locking pin.
404 - Hinge or connecting means.
500 - Side perspective view of a scissor wall in an open configuration.
600 - Top perspective view of the optical fiber enclosure.
602 - First optical fiber cables.
604 - Second optical fiber cable.
700 - Top perspective view of the optical fiber enclosure.
800 - Top perspective view of the optical fiber enclosure.
802 - Pivot pin.
900 - Perspective view of the optical fiber enclosure.
1000 - Partial sectional view of the optical fiber enclosure representing placement of scissor wall.
1002 - Cavity.
1100 - Partial sectional view of the optical fiber enclosure representing placement of scissor wall.
1200 - Partial sectional view of the optical fiber enclosure representing placement of scissor wall.
1202 - Securing means (e.g., Screws).
1204 - Securing means (e.g., Screws).
1206 - Grommets.
1300 - A flow chart.
1400 - A flow chart

The optical fiber enclosure is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Term "optical fiber" as used herein refers to a light guide that provides highspeed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

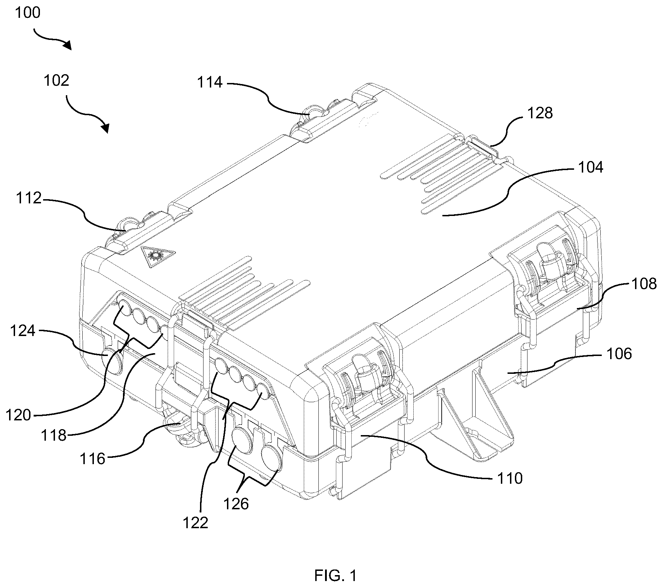

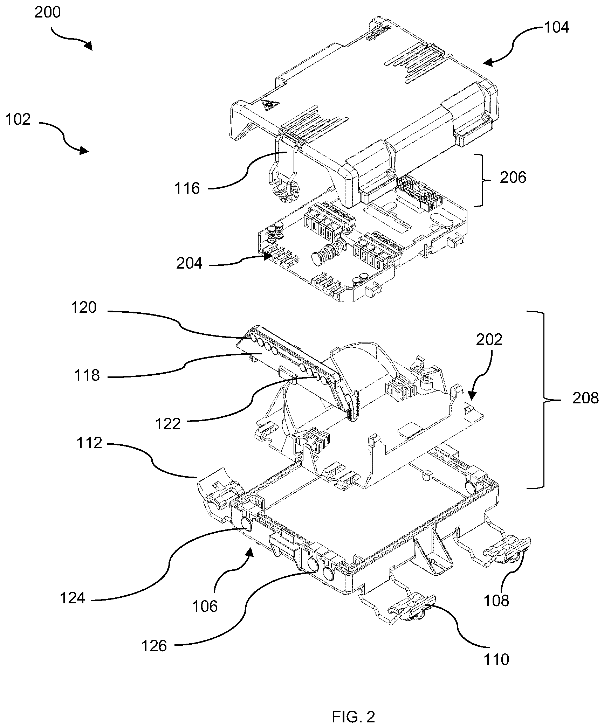

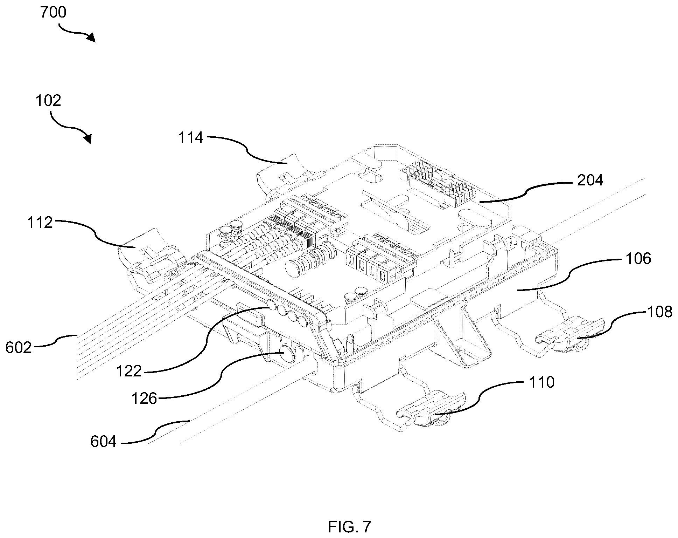

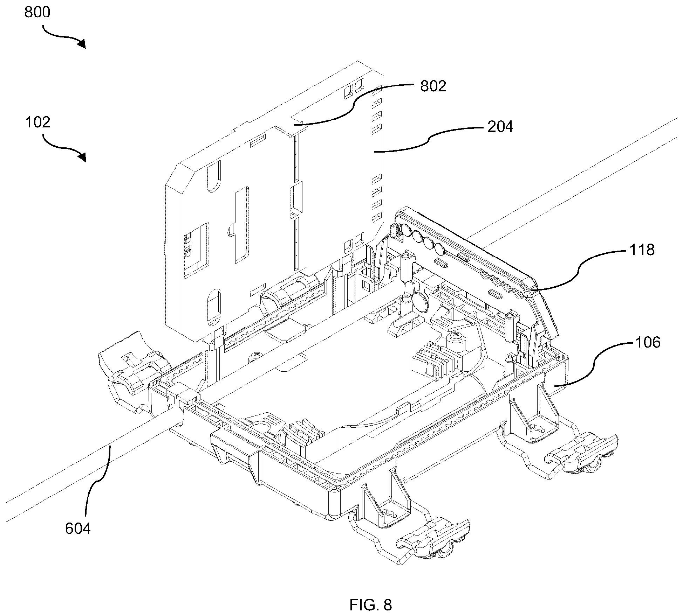

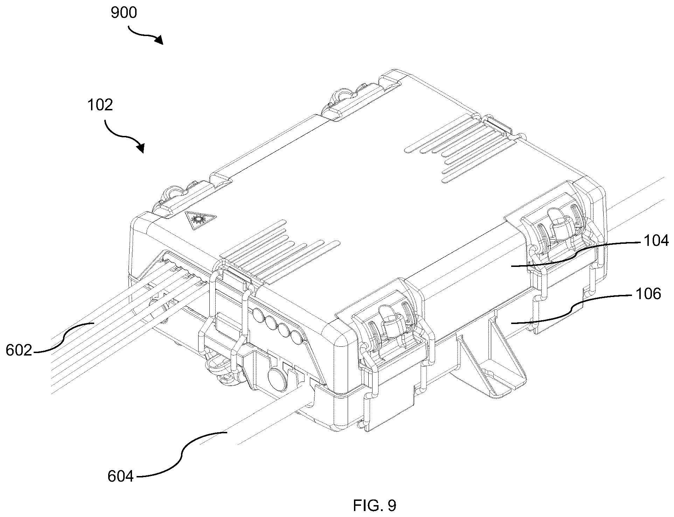

Fig. 1- Fig. 9 are pictorial snapshots illustrating a perspective view (100), an exploded view (200), a front perspective view (300) of a scissor wall (118) in a closed configuration, a front perspective view (400) of the scissor wall (118) in an open configuration, a side perspective view (500) of the scissor wall (118) in the open configuration, a top perspective view (600) of the optical fiber enclosure (102) without an enclosure cover (104) in which the scissor wall (118) is in the open configuration, a top perspective view (700) of the optical fiber enclosure (102) without the enclosure cover (104) in which the scissor wall (118) is in the closed configuration, a top perspective view (800) of the optical fiber enclosure (102) in which a pivoting layer (204) is opened, a perspective view (900) of the optical fiber enclosure (102) having optical fiber cables (602, 604) in accordance with one or more embodiments of the present disclosure.

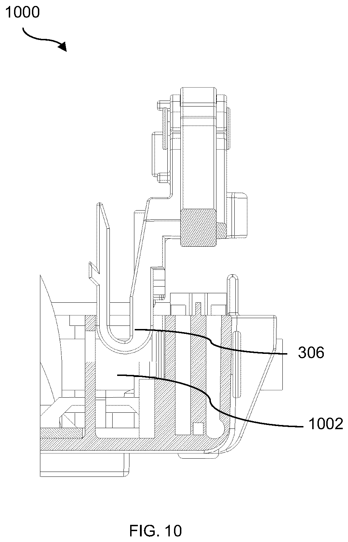

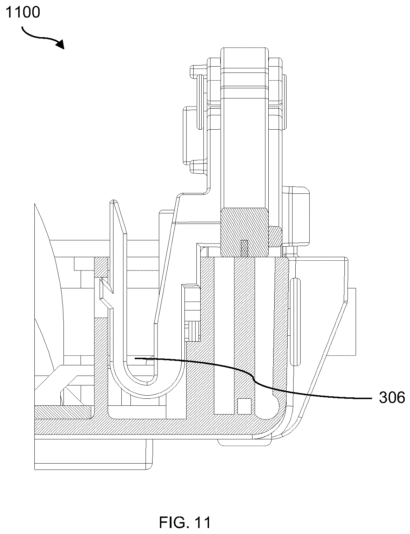

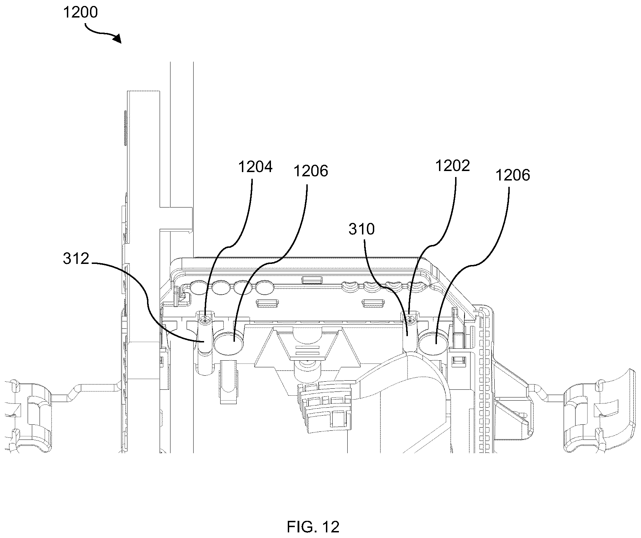

Fig. 10, Fig. 11 and Fig. 12 illustrate a partial sectional view (1000, 1100, 1200) of the optical fiber enclosure (102) representing placement of the scissor wall (118) in the optical fiber enclosure (102) in accordance with one or more embodiments of the present disclosure.

Referring to Fig. 1 to Fig. 12, the optical fiber enclosure (102) may also be called as an optical facade box, a distribution box, and an optical fiber box. In particular, the optical fiber enclosure (102) can be mounted on a wall or a flat surface using fasteners. Alternatively, the optical fiber enclosure (102) can be fixed over a pole as well as on a structure for an aerial fiber deployment.

Further, the optical fiber enclosure (102) includes an enclosure cover (104), a base (106), a first latch (108), a second latch (110), a third latch (112), a fourth latch (114), a fifth latch (116), a sixth latch (128), a scissor wall (118), a first set of cable ports (120, 122), a second set of cable ports (124, 126), an internal fruit (202), a pivoting layer (204), an upper compartment (206) and a lower compartment (208).

In accordance with an embodiment of the present disclosure, the enclosure cover (104) is designed to securely close and seal the optical fiber enclosure (102) when placed over the base (106) and provides a protection for the optical fiber cables (602, 604) and components housed within the optical fiber enclosure (102).

Moreover, the enclosure cover (104) includes features such as latches (108, 110, 112, 114, 116 and 128), locks, or hinges that allow for easy access to an interior of the optical fiber enclosure (102) when necessary for a user (technician, operator, or the like). Further, the enclosure cover (104) facilitates installation, maintenance, and troubleshooting tasks, enabling the user (e.g., technician or the like) to work with the optical fiber cables (602, 604) and components inside the optical fiber enclosure (102).

In accordance with an embodiment of the present disclosure, the enclosure cover (104) helps to protect the interior of the optical fiber enclosure (102) from environmental factors such as moisture, dust, debris, and temperature fluctuations. By creating a sealed enclosure, the enclosure cover (104) helps maintain the reliability and performance of an optical fiber network housed within, even in harsh outdoor environments or industrial environments. Also, depending on the design, the enclosure cover (104) may incorporate locking mechanisms or tamper-resistant features to prevent unauthorized access to contents of the optical fiber enclosure (102). This helps safeguard the integrity of the optical fiber network and prevents theft, vandalism, or tampering with the components (or equipment) housed inside the optical fiber enclosure (102).

In accordance with an embodiment of the present disclosure, the enclosure cover (104) is configured to transition between a completely disengaged state and a completely engaged state. In particular, the enclosure cover (104) may be completely removed from the optical fiber enclosure (102) so as to make working inside the optical fiber enclosure (102) easier.

In an implementation of present disclosure, the enclosure cover (104) is unmounted from the optical fiber enclosure (102) so that a sealing element (e.g., compressible elastomer, thermoplastic elastomer, any other suitable elastomer, combination of elastomer and polypropylene or the like) is decompressed until the optical fiber enclosure (102) is unsealed, thereby transitioning the enclosure cover (104) from the completely engaged state to the completely disengaged state.

In another implementation of present disclosure, the enclosure cover (104) is mounted at the optical fiber enclosure (102), so that the sealing element (314) is compressed until the optical fiber enclosure (102) is sealed, thereby transitioning the enclosure cover (104) from the completely disengaged state to the completely engaged state.

The optical fiber cables (602, 604) may comprise, but not limited to, a plurality of optical fibers, a group of loose optical fibers, a group of optical fiber ribbons, a stack of optical fiber ribbons, a group of bendable ribbons, a group of corrugated ribbons, a group of intermittently bonded optical fiber ribbons, a plurality of buffer tubes, a plurality of tight buffered optical fibers, loose tubes, and micromodules.

In accordance with an embodiment of the present disclosure, the sealing element (314), preferably elastomer, is used to seal the optical fiber enclosure (102) and is present between the base (106) and the enclosure cover (104), hence making the optical fiber enclosure (102) IP68 compliant. Further, the sealing element (314) through the use of two different co-molded materials (elastomer or combination of elastomer and polypropylene) generates a kind of hinge that ensures IP68 grade protection of the optical fiber enclosure (102).

Furthermore, a shape and a size of the enclosure cover (104) may vary based on the usage and implementation. The enclosure cover (104) may be made of metal, aluminium, plastic, non-electrically conductive material, or the like. Particularly, the enclosure cover (104) is attached with the base (106) by using the first latch (108), the second latch (110), the third latch (112), the fourth latch (114), the fifth latch (116) and the sixth latch (128). Alternatively, the enclosure cover (104) is attached with the base (106) by using a suitable connecting means (e.g., hinge mechanism, locking means, or the like).

In accordance with an embodiment of the present disclosure, the base (106) provides a stable foundation for the entire optical fiber enclosure (102) and ensures that the optical fiber enclosure (102) remains securely anchored in place when installed. A structural support of the base (106) is crucial for maintaining the integrity of the optical fiber enclosure (102), especially in outdoor or rugged environments wherein it may be subject to vibrations, impacts, or other external forces.

In accordance with an embodiment of the present disclosure, the base (106) may typically include mounting points that allow the optical fiber enclosure (102) to be securely attached to the wall, the pole, or other mounting structure ensuring that the optical fiber enclosure (102) remains in a desired position and orientation, providing easy access to the optical fiber cables (602, 604) and other components (e.g., cable management trays, splice trays, adapter packs, splitter, splice tube holders, or the like) while minimizing the risk of accidental displacement or damage of the optical fiber cables (602, 604) and other components. Further, the base (106) may incorporate features such as gaskets, seals, or drainage channels (not shown) to help protect the interior of the optical fiber enclosure (102) from environmental factors such as moisture, dust, or debris.

Further, depending on the design of the optical fiber enclosure (102), the base (106) may include provisions for routing and securing the optical fiber cables (602, 604) as they enter or exit the optical fiber enclosure (102). This helps organize the optical fiber cables (602, 604) and prevents them from becoming tangled or damaged, facilitating easier installation, maintenance, and troubleshooting.

In accordance with an embodiment of the present disclosure, the base (106) may also serve as a platform for integrating additional components or accessories, such as power distribution units, splice trays, or equipment mounting brackets allowing the optical fiber enclosure (102) to be customized to meet specific requirements or accommodate additional functionalities, enhancing its versatility and utility in various deployment scenarios.

In accordance with an embodiment of the present disclosure, shape and size of the base (106) may vary based on the usage and implementation. The base (106) may be made of metal, aluminium, plastic, non-electrically conductive material, or the like.

The base (106) and the enclosure cover (104) form an external housing that comprises the internal fruit (202) and the pivoting layer (204). In particular, the internal fruit (202) (is also called as internal fitment) is placed over the base (106) using the connecting units (e.g., latch, screws or the like). Moreover, the internal fruit (202) may play a crucial role in organizing and managing the optical fiber cables (602, 604) and other components (e.g., cable management trays, splice trays, mounting brackets for passive optical components, and any other elements necessary for the installation, protection, and maintenance of the optical fiber network) within the optical fiber enclosure (102). Further, the internal fruit (202) may ensure that the optical fiber cables (602, 604) are properly routed, spliced, and managed within the optical fiber enclosure (102), while also maintaining the necessary environmental protection and accessibility for maintenance purposes.

The pivoting layer (204) is placed over the internal fruit (202). The pivoting layer (204) comprises a pivot pin (802), which locks the pivoting layer (204) with the internal fruit (202) at 90 degrees due to the shape of the pivot pin (802). The shape and design of the pivot pin (802) may vary, hence the locking degree may vary. In particular, the pivoting layer (204) serves as a mechanism to divide an overall enclosure space into separate compartments, typically the upper compartment (206) and the lower compartment (208). Moreover, the pivoting layer (204) may be rotated or pivoted to provide access to either compartment as needed. The user may rotate or pivot the pivoting layer (204) to access the desired compartment without needing to open the entire optical fiber enclosure (102). Further, the pivoting layer (204) contributes in maintaining the environmental protection of the optical fiber enclosure (102) by sealing off each compartment when closed. This helps prevent dust, moisture, or other contaminants from entering the optical fiber enclosure (102) and potentially damaging the optical fiber cables (602, 604) or components inside the optical fiber enclosure (102). Furthermore, the pivoting layer (204) allows for the accommodation of a greater number of cables or components in a compact footprint.

In accordance with an embodiment of the present disclosure, the upper compartment (206) is formed by the appropriate placement of the enclosure cover (104) and the pivoting layer (204) and the lower compartment (208) is formed by the appropriate placement of the internal fruit (202) and the base (106) below the pivoting layer (204). Particularly, the upper compartment (206) and the lower compartment (208) have at least one cable port (120, 122, 124, 126) and each compartment is configured to be accessed without disturbing relative alignment of optical fiber cables (602, 604) in other compartment of the optical fiber enclosure (102) as per the requirement.

In an exemplary example, the user can access the lower compartment (208) of the optical fiber enclosure (102) without disturbing alignment of the optical fiber cables (602) in the upper compartment (206) and vice-versa. The optical fiber cables (602) of the upper compartment (206) may be installed and accessed through the at least one first set of cable ports (120, 122) of the scissor wall (118).

In accordance with an embodiment of the present disclosure, the lower compartment (208) has different optical fiber cables (e.g., feeder cables) (604) which are routed into the optical fiber enclosure (102), wherein tubes may be pulled from the feeder cable (604) that go up to the upper compartment (206) to feed adapters (not shown) placed on the upper compartment (206).

In accordance with an embodiment of the present disclosure, the scissor wall (118) (or modular wall) is formed at an externally accessible surface (i.e., on external surface) of the optical fiber enclosure (102), which is placed in a trapezoidal cavity of the enclosure cover (104), and hence, forming the external housing when mating with the base (106). In particular, the scissor wall (118) includes at least two segments (302, 304) configured to form the at least one first set of cable ports (120, 122) at mating edges (318-332) in a closed configuration.

In accordance with an embodiment of the present disclosure, at least one first set of cable ports (120, 122) is formed due to predefined undulations at the mating edges (318-332) at the at least two segments (302, 304) in the closed configuration. A first segment (302) comprises a locking pin (402) protruded from the first segment (302), which locks a second segment (304), thereby securing the connection between the first segment (302) and the second segment (304). Further, at least two segments (302, 304) are locked at 45 degrees (for example) in the closed configuration due to the shape of the locking pin (402). A degree of locking may vary based on the structure of the locking pin (402).

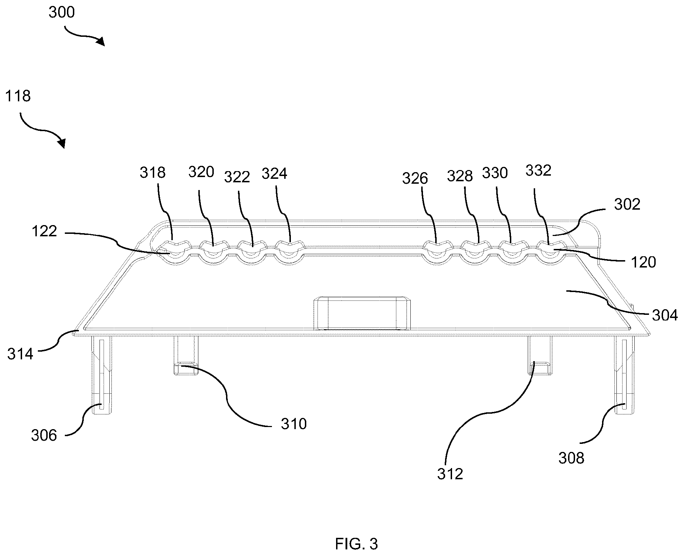

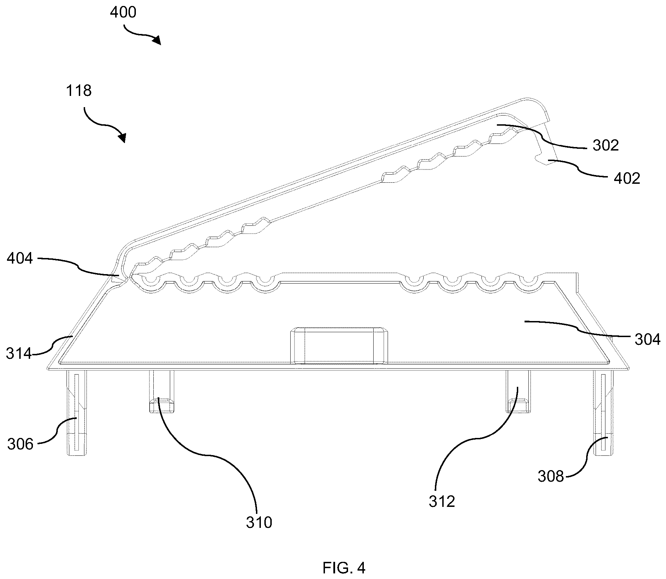

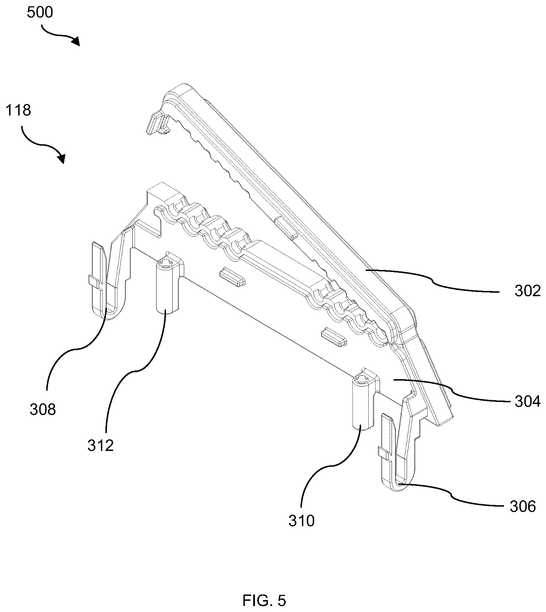

Further, at least two segments (302, 304) are dimensionally non-identical. The shape and size of the two segments (302, 304) depend on a shape and size of the optical fiber enclosure (102). The shown example shape of the two segments (302, 304) (Fig. 3 to Fig. 5) is for rectangular or square optical fiber enclosures. In particular, the two segments (302, 304), when locked, form a wedge shaped scissor wall, however, the concept of using the scissor wall (118) can be applied to the optical fiber enclosure (102) having other shapes as well. The at least two segments (302, 304) are configured to rotate relative to each other to enable transition between the closed configuration (as shown in Fig. 3) and an open configuration (as shown in Fig. 4 and Fig. 5) by using a hinge (404).

The hinge (or any other connecting means) (404) is present to help the rotation of at least two segments (302, 304) for opening and closing the scissor wall (118) between the at least two segments (302, 304). The hinge (404) is formed at one end of the scissor wall (118), and other end of the scissor wall (118) includes a snap-fit lock or the locking pin (402) (as mentioned above) for providing the closed configuration for the scissor wall (118).

The scissor wall (118) with the at least two segments (302, 304) having the at least one first set of cable ports (120, 122) at the mating edges (318-332) of the scissor wall (118) aligns and seals the optical fiber cables (602, 604). In this way, the user can access the lower compartment (208) without disturbing the cable alignment of the upper compartment (206). By rotating the scissor wall (118) from the closed configuration to the open configuration, the at least one first set of cable ports (120, 122) is accessible for installing, aligning and sealing the optical fiber cables (602) in a simple manner.

Accommodating the at least one first set of cable ports (120, 122) between the at least two segments (302, 304) of the scissor wall (118) facilitates sealing/aligning the optical fiber cables (602, 604) even after removal of the enclosure cover (104). In particular, the scissor wall (118) ensures the alignment of the optical fiber cables (602, 604) in a way that the alignment doesn't get disturbed after removal of the enclosure cover (104). Moreover the scissor wall (118) provides an option to easily remove/replace/align the optical fiber cables (602, 604) for the optical fiber enclosure (102) by simply opening the scissor wall (118). Also, the optical fiber cables (602, 604) passing through the scissor wall (118) cannot be disturbed if the scissor wall (118) is closed and the user can access the lower compartment (208) easily. Based on the proposed design of the optical fiber enclosure (102), when the user removes the enclosure cover (104) and doesn't open the scissor wall (118), the optical fiber cables (602, 604) of the upper compartment (206) do not get disturbed and the user can access the lower compartment (208) by simply rotating the pivoting layer (204). To rotate the pivoting layer (204), however, it is necessary to open the scissor wall (118); the cable connection remains in working condition.

Further, the optical fiber enclosure (102) comprises two layers/levels for entering the optical fiber cables (602, 604), wherein a first layer is present in the scissor wall (118) and a second layer is present below the scissor wall (118).

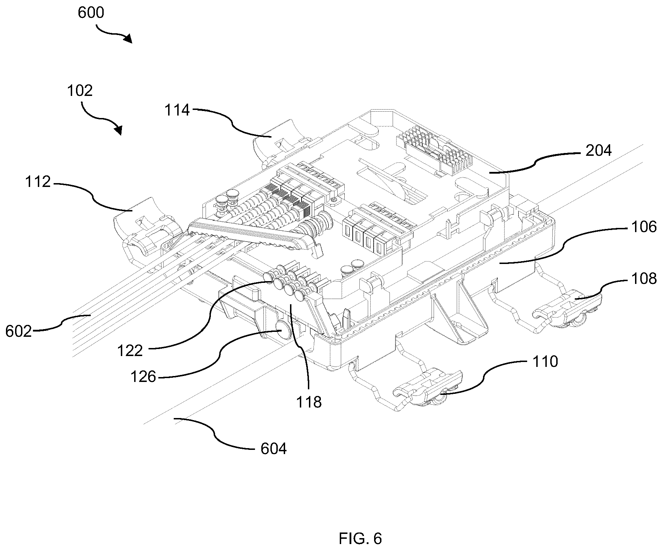

In an example implementation, as shown in Fig. 6 to Fig. 9, the optical fiber cables (602) enter into the optical fiber enclosure (102) from outside, which pass through the first layer of the scissor wall (118) and connect to adapters, then are attached with cable ties to the appropriate walls located on the pivoting layer (204). At last, the enclosure cover (104) is mounted, which provides the final compression via a latch system (having the first latch (108), the second latch (110), the third latch (112), the fourth latch (114), the fifth latch (116), the sixth latch (128) and so on so forth). Apart from the optical fiber cables (602), pigtails and other similar cable components may enter into the optical fiber enclosure (102) from outside. Similarly, the optical fiber cable (604) enters into the optical fiber enclosure (102) from outside, which passes through the second layer of the scissor wall (118) having the second set of cable ports (124, 126).

In accordance with an embodiment of the present disclosure, the scissor wall (118) further includes a first interlocking unit (306), a second interlocking unit (308), a first connecting means (310) and a second connecting means (312), which are used to attach/interlock the scissor wall (118) with the base (106), the internal fruit (202), and the pivoting layer (204) as shown in Fig. 10 to Fig. 12. In particular, the first interlocking unit (306) and the second interlocking unit (308) are U-shaped and inserted in a cavity (1002) formed in the base (106) in order to secure the scissor wall (118). Once the scissor wall (118) is installed via its interlocking system, a securing means (such as screws, or the like) (1202, 1204) may be used to provide additional compression to the underlying row of grommets (1206). Further, the securing means (1202, 1204) pass through (or screwed over) the first connecting means (310) and the second connecting means (312) to couple the scissor wall (118) with the base (106) and the internal fruit (202).

In accordance with an embodiment of the present disclosure, the optical fiber enclosure (102) handles the entry of the feeder cable (604) on the row of grommets (1206) placed in the second set of cable ports (124, 126), after which the scissor wall (118) is mounted using the first interlocking unit (306) and the second interlocking unit (308). Once inserted into its location (cavity (1002)), of the optical fiber enclosure (102), the optical fiber enclosure (102) receives a vertical compression force until the optical fiber cables (602, 604) are completely sealed.

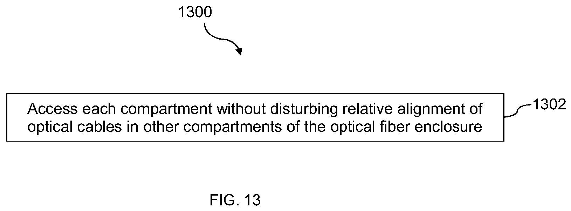

Fig. 13 is a flow chart (1300) illustrating a method for operating at least one compartment from at least two compartments (206, 208) in the optical fiber enclosure (102).

At step 1302, each compartment (206, 208) is accessed without disturbing relative alignment of the optical fiber cables (602, 604) in other compartments of the optical fiber enclosure (102).

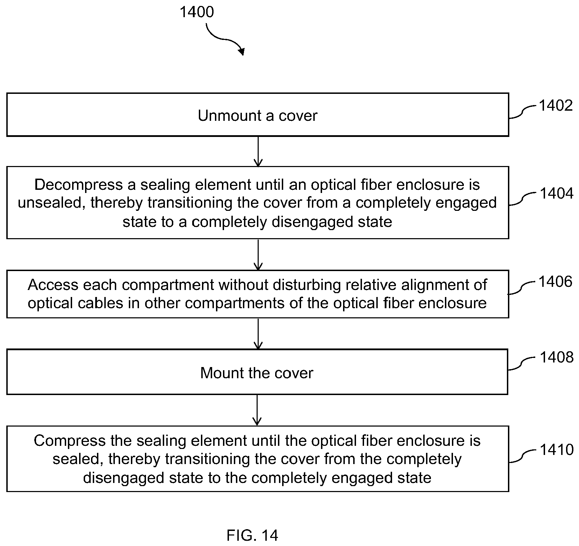

Fig. 14 is a flow chart (1400) illustrating a method for operating the at least one compartment from the at least two compartments (206, 208) in the optical fiber enclosure (102).

At step 1402, the enclosure cover (104) is unmounted.

At step 1404, the sealing element (314) is decompressed until the optical fiber enclosure (102) is unsealed, thereby transitioning the enclosure cover (104) from the completely engaged state to the completely disengaged state.

At step 1406, each compartment (206, 208) is accessed without disturbing relative alignment of the optical fiber cables (602, 604) in other compartments of the optical fiber enclosure (102).

At 1408, the enclosure cover (104) is mounted.

At 1410, the sealing element (314) is compressed until the optical fiber enclosure (102) is sealed, thereby transitioning the enclosure cover (104) from the completely disengaged state to the completely engaged state.

In accordance with an embodiment of the present disclosure, the optical fiber enclosure (102), the optical fiber enclosure (102) can manage different sized cables. The optical fiber enclosure (102) is easy to use for technician operations. In case of fiber breakage, the optical fiber enclosure (102) can be easily repaired by applying a separate kit (e.g., splice trays or the like).

Advantageously, in case of breakage or malfunction, it is possible to operate the optical fiber enclosure (102) using a spare cable stored in the base (106). Once removed, containment fins of the spare cable will need to be broken off by hand, and a tray kit is installed to make new splices. Further, in order to use the spare cable inside the optical fiber enclosure (102), a new feeder cable is to be entered through the second set of cable ports (126). Based on the proposed design of the optical fiber enclosure (102), the optical fiber enclosure (102) allows for the entry of optical fiber cables with different diameters.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber enclosure (102), comprising: at least two compartments (206, 208),
wherein each compartment comprises at least one cable port (120, 122, 124, 126);
wherein each compartment is configured to be accessed without disturbing relative alignment of optical fiber cables (602, 604) in other compartments of the optical fiber enclosure (102).

2. The optical fiber enclosure (102) as claimed in claim 1, wherein the optical fiber enclosure (102) comprises at least one scissor wall (118) at an externally accessible surface of the optical fiber enclosure (102).

3. The optical fiber enclosure (102) as claimed in claim 1, wherein the at least one scissor wall (118) comprises at least two segments (302, 304) configured to form at least one first set of cable ports (120, 122) at mating edges (318-332) in a closed configuration.

4. The optical fiber enclosure (102) as claimed in claim 2, wherein the at least one first set of cable ports (120, 122) at the mating edges (318-332) is formed due to predefined undulations at the mating edges (318-324) at the at least two segments (302, 304) in the closed configuration.

5. The optical fiber enclosure (102) as claimed in claim 2, wherein the at least two segments (302, 304) are dimensionally non-identical.

6. The optical fiber enclosure (102) as claimed in claim 1, wherein the optical fiber enclosure (102) has at least one scissor wall (118).

7. The optical fiber enclosure (102) as claimed in claim 1, wherein the at least one scissor wall (118) comprises at least two segments (302, 304) that are configured to rotate relative to each other to enable transition between a closed configuration and an open configuration.

8. The optical fiber enclosure (102) as claimed in claim 5, wherein the at least two segments (302, 304) are hinged to enable relative rotation between the at least two segments (302, 304).

9. The optical fiber enclosure (102) as claimed in claim 1, wherein the optical fiber enclosure (102) comprises a cover (104) and the cover (104) is configured to transition between a completely disengaged state and a completely engaged state.

10. A method for operating at least one compartment from at least two compartments (206, 208) in an optical fiber enclosure (102), **characterized in that**: accessing each compartment without disturbing relative alignment of optical fiber cables (602, 604) in other compartments of the optical fiber enclosure (102).

11. The method as claimed in claim 10, wherein the method comprises:
unmounting a cover (104); and decompressing a sealing element (314) until the optical fiber enclosure (102) is unsealed, thereby transitioning the cover (104) from a completely engaged state to a completely disengaged state.

12. The method as claimed in claim !0, wherein the method comprises rotating at least two segments (302, 304) of at least one scissor wall (118) relative to each other to enable transition between a closed configuration and an open configuration, wherein the at least one scissor wall (118) is formed at an externally accessible surface of the optical fiber enclosure (102).

13. The method as claimed in claim 10, wherein the method comprises aligning the optical fiber cables (602) into at least one first set of cable ports (120, 122) at mating edges (318-332) of at least two segments (302, 304) of the optical fiber enclosure (102).

14. The method as claimed in claim 10, wherein the method comprises locking the at least two segments (302, 304) of at least one scissor wall (118).

15. The method as claimed in claim 10, wherein the method comprises:
mounting a cover (104); and compressing a sealing element (314) until the optical fiber enclosure (102) is sealed, thereby transitioning the cover (104) from a completely disengaged state to a completely engaged state.
